(19) Europäisches Patentamt
European Patent Office
Office européen des brevets

(11) **EP 1 689 986 B1**

(12) **FASCICULE DE BREVET EUROPEEN**

(45) Date de publication et mention
de la délivrance du brevet:
**21.03.2007 Bulletin 2007/12**

(21) Numéro de dépôt: **04791468.4**

(22) Date de dépôt: **05.10.2004**

(51) Int Cl.:
*F01N 9/00* *(2006.01)*    *F01N 11/00* *(2006.01)*

(86) Numéro de dépôt international:
**PCT/FR2004/002513**

(87) Numéro de publication internationale:
**WO 2005/049986 (02.06.2005 Gazette 2005/22)**

(54) **SYSTEME D'AIDE A LA MAINTENANCE D'UN FILTRE A PARTICULES INTEGRE DANS UNE LIGNE D'ECHAPPEMENT D'UN MOTEUR DE VEHICULE AUTOMOBILE**

SYSTEM ZUR WARTUNGSÜBERWACHUNG EINES IN EINEM ABGASSYSTEM EINES KRAFTFAHRZEUGMOTORS ANGEBRACHTEN PARTIKELFILTERS

SYSTEM FOR THE MAINTENANCE CONTROL OF A PARTICLE FILTER FITTED IN AN EXHAUST SYSTEM OF A MOTOR VEHICLE ENGINE

(84) Etats contractants désignés:
**AT BE BG CH CY CZ DE DK EE ES FI FR GB GR HU IE IT LI LU MC NL PL PT RO SE SI SK TR**

(30) Priorité: **07.11.2003 FR 0313160**

(43) Date de publication de la demande:
**16.08.2006 Bulletin 2006/33**

(73) Titulaire: **Peugeot Citroën Automobiles S.A.
78140 Vélizy Villacoublay (FR)**

(72) Inventeur: **COLIGNON, Christophe
F-92300 LEVALLOIS PERRET (FR)**

(74) Mandataire: **Habasque, Etienne J. Jean-François et al
Cabinet Lavoix
2, Place d'Estienne d'Orves
75441 Paris Cédex 09 (FR)**

(56) Documents cités:
**EP-A- 1 103 702       EP-A- 1 229 223
EP-A- 1 234 959       US-A1- 2003 131 592**

EP 1 689 986 B1

**Description**

La présente invention concerne un système d'aide à la maintenance d'un filtre à particules intégré dans une ligne d'échappement d'un moteur Diesel de véhicule automobile.

L'un des principaux problèmes liés à l'utilisation d'un filtre à particules est sa maintenance. En effet, tout au long de l'utilisation d'un véhicule équipé d'un filtre à particules, celui-ci s'encrasse. Les différents résidus qui s'y entassent peuvent être principalement de quatre origines différentes. En effet, des résidus peuvent être formés d'éléments métalliques provenant du moteur ou de la ligne d'échappement ou de particules non filtrées à l'admission. D'autres résidus peuvent être formés par des cendres provenant du lubrifiant du moteur ou encore des cendres provenant du carburant d'alimentation de celui-ci. Enfin, d'autres résidus peuvent être formés par des résidus de combustion d'un additif d'aide à la régénération. On sait en effet, que de tels additifs peuvent être utilisés et être mélangés au carburant d'alimentation du moteur pour abaisser la température de combustion des suies piégées dans le filtre à particules.

Dans un concept de filtre à particules utilisant un additif d'aide à la régénération permettant de favoriser la combustion des suies, ces quatre éléments s'accumulent dans le filtre. Dans le cas où un tel additif n'est pas utilisé, par exemple dans le cas des filtres à particules imprégnés ou catalysés, seuls trois de ces éléments sont présents dans le filtre, ce qui réduit le volume de résidus accumulés pour un kilométrage parcouru donné.

Cependant quel que soit le concept utilisé, le filtre à particules s'encrasse progressivement réduisant ainsi le volume disponible pour le stockage des particules. De ce fait, pour préserver la tenue thermomécanique du filtre, il faut régénérer ce filtre de plus en plus souvent, ce qui se traduit par une élévation de la surconsommation de carburant liée au filtre à particules dans le cas par exemple où la régénération se fait par utilisation de post-injections ou d'un brûleur et par une dilution de l'huile de lubrification du moteur par le carburant post-injecté avec un risque de casse du moteur.

Par ailleurs, la réduction du volume utile au stockage des suies engendre des pertes de charge de plus en plus élevées aux bornes du filtre, ce qui se traduit à la fois par une augmentation de la consommation en carburant du véhicule hors phase de régénération et un risque de casse du moteur, par exemple si la pression différentielle aux bornes du filtre est trop forte et provoque une réouverture des soupapes. Il est donc nécessaire de nettoyer ou de changer le filtre au bout d'un certain kilométrage parcouru lorsque le volume disponible pour le stockage des particules devient trop faible.

Dans les applications actuellement en série dans lesquelles les véhicules sont équipés d'un filtre à particules, le nettoyage est réalisé à un kilométrage fixe comme par exemple 120.000 kilomètres, quel que soit le profil d'utilisation du véhicule. Or, la quantité de résidus stockée dépend de multiples facteurs tels que la consommation d'huile, la consommation d'additif, le nombre de régénérations déjà tentées, etc.

En effet, deux véhicules ayant parcouru le même nombre de kilomètres peuvent avoir accumulé une quantité de résidus très différente l'un de l'autre en fonction du type de roulage de ces véhicules. Par exemple, un roulage en ville avec une consommation moyenne de carburant de 10 litres au 100 kilomètres engendre 67% de résidus de combustion d'additif de plus qu'un roulage sur route ouverte avec une consommation moyenne de 6 litres au 100 kilomètres. On conçoit alors qu'en définissant à l'avance un intervalle de nettoyage du filtre à particules pour tous les véhicules, le taux d'encrassement du filtre à particules de ceux-ci n'est forcément pas optimisé, ce qui se traduit par l'observation de fortes disparités d'encrassement entre les filtres à particules lors des opérations de nettoyage.

Le document EP 1 103 702 A2 divulgue un procédé de gestion du fonctionnement d'un filtre à particules en prenant en compte son chargement de résidus non combustibles, qui est déduit de la quantité consommée d'additifs destinés à faire baisser la température de combustion des suies.

Par ailleurs, le contexte actuel avec une forte demande pour imposer l'utilisation d'un filtre à particules, a mis particulièrement en avant le coût global du système et notamment celui de l'opération de maintenance. Il devient alors indispensable de repousser cette opération de nettoyage du filtre à particules le plus tard possible afin de réduire le coût pour l'utilisateur.

Il convient alors d'optimiser la fréquence de nettoyage du filtre à particules.

Le but de l'invention est donc de résoudre ces problèmes.

A cet effet, l'invention a pour objet un système d'aide à la maintenance d'un filtre à particules intégré dans une ligne d'échappement d'un moteur Diesel de véhicule automobile, caractérisé en ce qu'il comporte des moyens de calcul du volume de cendres de l'huile de lubrification du moteur, des moyens de calcul du volume de cendres du carburant d'alimentation du moteur, des moyens de calcul du volume utile du filtre à particules à partir d'un volume total de ce filtre à l'état neuf et des volumes de cendres calculés précédemment, et des moyens de calcul d'un taux d'encrassement du filtre à particules à partir du volume total du filtre à l'état neuf et du volume utile calculé précédemment pour déclencher une requête de maintenance lorsque le taux d'encrassement dépasse un seuil prédéterminé.

Selon d'autres caractéristiques, ce système d'aide à la maintenance comporte en outre :

- des moyens de calcul du volume de résidus de combustion d'un additif destiné à abaisser la température de combustion des particules piégées dans le filtre à particules, et mélangé au carburant d'alimentation de ce moteur, et raccordés aux moyens de calcul du volume utile ;

- des moyens de calcul du kilométrage auquel devra être prévue une opération de maintenance du filtre à particules, à partir du kilométrage parcouru par le véhicule depuis l'état filtre à particules neuf ou nettoyé et du taux d'encrassement du filtre tel que calculé précédemment;

- des moyens de calcul du kilométrage restant à parcourir avant l'opération de maintenance du filtre à particules, à partir du kilométrage de maintenance calculé précédemment et du kilométrage déjà parcouru par le véhicule.

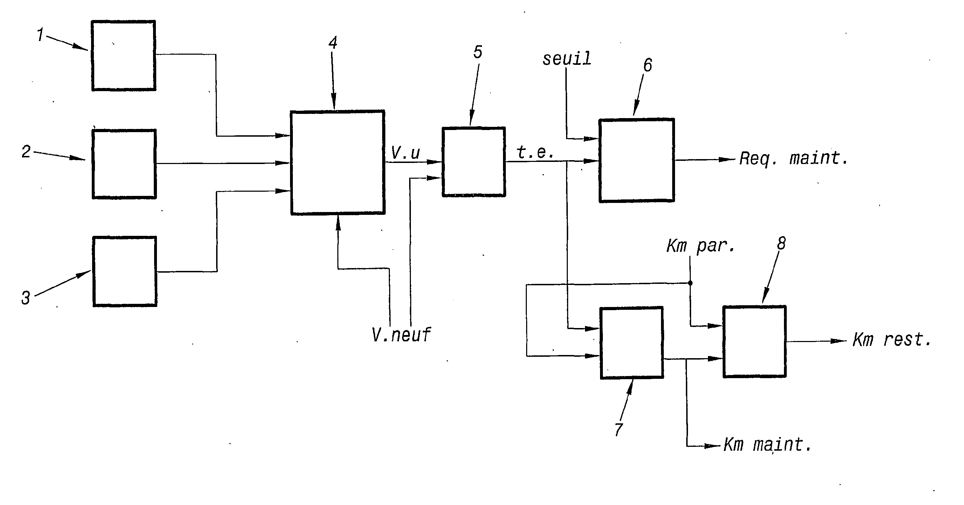

L'invention sera mieux comprise à la lecture de la description qui va suivre donnée uniquement à titre d'exemple et faite en se référant au dessin annexé qui illustre la structure générale d'un système d'aide selon l'invention.

Le but du système selon l'invention est d'estimer de façon la plus précise possible à tout instant, le volume de résidus accumulés dans un filtre à particules et de le comparer à un seuil afin de déterminer s'il faut nettoyer ce filtre ou non.

Ce filtre est alors intégré dans une ligne d'échappement d'un moteur Diesel de véhicule automobile.

Ce système doit également permettre de prédire à quel kilométrage, l'opération de nettoyage devra être effectuée et cette information, accessible au réseau après-vente du constructeur, doit permettre à celui-ci de planifier avec l'utilisateur du véhicule le moment auquel il faudra procéder à la maintenance du filtre.

L'objectif de ce système est donc d'estimer à tout moment le niveau d'encrassement du filtre à particules par les résidus et de prédire quand le nettoyage du filtre sera nécessaire. Pour cela, on estime la quantité de cendres provenant du lubrifiant et du carburant quel que soit le concept du filtre à particules, c'est à dire par exemple pour un filtre à particules catalysé, un filtre à particules imprégné, un filtre à particules non revêtu sans additif ou un filtre à particules avec additif, mais également la quantité de résidus de combustion de l'additif qui est nulle pour un filtre à particules catalysé ou imprégné ou non revêtu sans additif. La quantité de résidus métalliques provenant du moteur et de la ligne d'échappement et de particules non filtrées à l'admission peut être considérée comme négligeable comme cela a été confirmé par l'analyse de plusieurs échantillons de résidus.

La masse de cendres du lubrifiant accumulées dans le filtre dépend de la consommation en huile de lubrification du moteur et de la teneur en cendres du lubrifiant utilisé. Pour simplifier ce calcul, on prend comme hypothèse que le conducteur du véhicule utilise durant toute la vie du véhicule l'huile préconisée par le constructeur, c'est à dire avec un taux de cendres constant. L'estimation de la masse de cendres de l'huile peut alors se faire de différentes façons. On peut ainsi utiliser une valeur prédéterminée de consommation d'huile pour le véhicule, valeur qui dépend de l'application moteur/véhicule considérée.

On peut également utiliser un modèle de type intégrateur prenant en compte une consommation d'huile instantanée fonction des conditions de fonctionnement du moteur et typiquement fonction du régime et du couple moteur.

D'autres modèles plus complexes prenant en compte la composition de l'huile, c'est à dire par exemple sa teneur en phosphore, en calcium, en potassium, etc. , la qualité de l'huile ou un indicateur de maintenance de l'huile peuvent également être envisagés pour estimer la quantité de cendres accumulées dans le filtre à particules.

Dans le cas de l'utilisation de la composition type d'une huile, la masse de cendres est calculée en fonction de la nature des composés issus de la combustion de l'huile, par exemple le phosphore se retrouve dans le filtre sous la forme de $PO_4$, le zinc sous la forme de $ZnO$ et le calcium sous la forme de $Ca\text{-}SO_4$, etc.

La masse de cendres provenant du carburant accumulée dans le filtre dépend directement de la consommation de carburant du véhicule et de la teneur en cendres de ce carburant. Pour simplifier le calcul on prend comme hypothèse que la teneur en cendres du carburant est constante quelle que soit la source d'approvisionnement en carburant. Le calcul le plus simple de la quantité de cendres du carburant consiste à utiliser un intégrateur qui multiplie la consommation instantanée par la teneur en cendres du carburant et par le pas de temps de calcul de la consommation instantanée.

Dans le cas où un additif est utilisé, la masse de résidus provenant de cet additif accumulée dans le filtre dépend de la quantité d'additif qui a été injectée dans le réservoir de carburant. Il existe également plusieurs possibilités d'estimation de cette masse. On peut par exemple utiliser l'information de quantité d'additif injectée provenant du calculateur de gestion du système de dosage de l'additif mais on peut également prendre en compte la consommation cumulée de carburant depuis le début de vie du véhicule en la multipliant par la valeur de dosage nominal de l'additif.

Une fois la masse totale de résidus calculée, il convient de la diviser par la masse volumique des résidus pour obtenir le volume réel de filtre occupé par ces résidus. Pour déterminer le volume extérieur que cela représente, car seul un canal sur deux du filtre est rempli de résidus, il faut diviser ce volume par le rapport d'ouverture du filtre, c'est à dire le rapport entre la surface frontale ouverte (uniquement les canaux ouverts) et la surface frontale totale du filtre. Ceci donne un rapport d'ouverture qui dépend de la structure du filtre, c'est à dire de la densité des cellules, de l'épaisseur des parois, de l'épaisseur du ciment entre les barreaux si le filtre est segmenté, etc.

La masse volumique des résidus utilisée peut l'être sous différentes formes. Dans le cas le plus simple, il s'agit d'une valeur constante. On peut cependant en complexifier l'expression pour la rendre la plus proche possible de la réalité. En effet, on constate une variation de la densité des résidus au fur et à mesure que le filtre s'encrasse. En général, on observe une densification de ces résidus. Dans ce cas, la masse volumique peut être déterminée par l'intermédiaire d'une courbe fonction soit du kilométrage parcouru depuis le début de vie du véhicule ou depuis le dernier nettoyage du filtre, soit de la quantité d'additif déjà utilisée, soit de la consommation de carburant cumulée, soit de la masse totale de résidus déjà accumulée.

Une fois le volume de résidus calculé, on détermine le volume libre restant pour stocker les particules. On compare alors ce volume libre à une valeur de seuil qui détermine le volume minimum acceptable avant de procéder au nettoyage du filtre. Ce volume minimum est prédéterminé sur des considérations de fréquence de régénération maximale à cause de la surconsommation générée par les phases de régénération du filtre ou de la dilution de l'huile par le carburant post-injecté ou d'un niveau de perte de charge trop important causant une chute des performances du moteur. Lorsque le volume libre descend sous le seuil, on déclenche une requête de nettoyage du filtre.

Par ailleurs, lors des opérations de maintenance classiques du véhicule, par exemple tous les 20.000 ou 30.000 kilomètres, le réseau après-vente du constructeur doit également pouvoir avoir accès à certaines données permettant d'obtenir des renseignements sur le taux d'encrassement du filtre par rapport au volume maximal préconisé avant de procéder à un nettoyage du filtre, et sur le kilométrage estimé auquel le filtre à particules devra être nettoyé, c'est à dire le kilométrage auquel le volume libre minimum sera atteint. Une variante peut également consister à donner la même information sous la forme d'un kilométrage restant à parcourir par le véhicule avant de devoir nettoyer le filtre.

L'estimation du kilométrage auquel il faudra procéder au nettoyage du filtre est indicative et prend comme hypothèse que le profil d'utilisation du véhicule sera à l'avenir le même que jusqu'à présent.

Pour affiner le besoin en maintenance du filtre, on peut ajouter des critères basés sur la mesure de la perte de charge du filtre juste après une régénération, c'est à dire lorsqu'il n'y a plus de particules dans les canaux. Par exemple, on peut considérer un seuil de perte de charge déterminé par une courbe fonction du débit volumique des gaz traversant le filtre.

Ceci est illustré sur la figure annexée sur laquelle on reconnaît un système d'aide à la maintenance d'un filtre à particules intégré dans une ligne d'échappement d'un moteur Diesel de véhicule automobile, qui comporte des moyens 1 de calcul du volume de cendres de l'huile de lubrification du moteur, des moyens 2 de calcul du volume de cendres du carburant d'alimentation du moteur et éventuellement, lorsqu'un additif destiné à abaisser la température de combustion des particules piégées dans le filtre à particules est mélangé au carburant d'alimentation de ce moteur, des moyens 3 de calcul du volume de résidus de combustion de cet additif.

Ces différentes informations de volumes de résidus et de cendres sont délivrées à des moyens 4 de calcul du volume utile du filtre à particules V.u à partir d'un volume total de ce filtre à l'état neuf ou nettoyé, V. neuf et des volumes de cendres et éventuellement de résidus, calculés précédemment.

Cette information de volume utile calculé V.u est alors délivrée à des moyens 5 de calcul d'un taux d'encrassement t.e. du filtre à particules à partir du volume total du filtre à l'état neuf ou nettoyé, V. neuf et cette information de taux d'encrassement t.e. est comparée à une valeur de seuil prédéterminée (seuil), par des moyens de comparaison 6, pour déclencher une requête de maintenance Req.Maint. du filtre à particules lorsque le taux d'encrassement t.e. dépasse ce seuil prédéterminé.

Bien entendu, des informations complémentaires peuvent être envisagées, comme par exemple l'utilisation de moyens de calcul du kilométrage Km maint. auquel devra être prévue une opération de maintenance du filtre à particules à partir d'un kilométrage parcouru Km par. par le véhicule depuis l'état filtre à particules neuf ou nettoyé et du taux d'encrassement t.e. du filtre tel que calculé précédemment, ces moyens de calcul étant désignés par la référence générale 7.

De plus, il peut également être prévu des moyens 8 de calcul du kilométrage Km rest. restant à parcourir avant une opération de maintenance du filtre à particules à partir du kilométrage de maintenance Km.maint. calculé précédemment et du kilométrage déjà parcouru Km par. par le véhicule.

Un exemple détaillé de ces différents calculs est donné ci-dessous.

Le tableau ci-dessous donne les différentes définitions des symboles utilisés :

| Désignation | Description | Unité |
|---|---|---|
| $V_0$ | Volume total du FAP neuf | l |
| Conso. Huile | Consommation kilométrique d'huile du moteur | l/km |
| $\rho_{res}$ | Densité des résidus provenant de l'additif et du lubrifiant | G/l |
| Rapport d'ouverture | Taux de surface frontale ouverte pour la filtration des particules et le stockage des résidus. | -- |
| $K_{additif}$ | Ratio masse de résidus d'additif/masse d'additif utilisée (dosage) | -- |
| $\rho_{huile}$ | Densité de l'huile | G/l |
| $K_{carburant}$ | Ratio masse de cendres venant du carburant / masse d'additif utilisée | -- |

(suite)

| Désignation | Description | Unité |
|---|---|---|
| Taux de cendres | Taux de résidus provenant de la combustion du lubrifiant | % |
| Distance FAP neuf | Distance parcourue depuis l'état FAP neuf ou nettoyé | Km |
| Quantité totale d'additif | Masse d'additif injecté depuis l'état FAP neuf ou nettoyé | |
| Volume libre | Volume libre minimal pour stocker les particules | l |

Calcul du volume de résidus de combustion de l'additif

Volume de résidus (t)= Quantité totale d'additif (t) * $K_{additif}$/Rapport d'ouverture * $\rho_{res}$

Calcul du volume issu des cendres de l'huile

Volume cendres huile = Conso. Huile * $\rho_{huile}$ * Distance FAP neuf * Taux de cendres/(100*Rapport d'ouverture*$\rho_{res}$)

La variable Distance FAP neuf correspond à la distance parcourue par le véhicule depuis l'état FAP neuf ou nettoyé.

Calcul du volume issu des cendres du carburant

Volume cendres carburant (t) = Quantité totale d'additif (t) * $K_{carburant}$/(Rapport d'ouverture*$\rho_{res}$)

Calcul du volume utile du FAP

Volume utile (t) = $V_0$- Volume de résidus (t) – Volume huile – Volume cendres carburant

Lorsque le volume atteint une valeur limite minimale il est demandé à l'utilisateur d'effectuer une opération de nettoyage du FAP.

Calcul du taux d'encrassement du FAP par les résidus

Le taux d'encrassement du FAP représente le pourcentage du volume occupé par les résidus par rapport au volume maximal admissible avant de procéder au nettoyage du filtre. Lorsque le taux d'encrassement du FAP est de 100%, il est nécessaire de nettoyer le FAP.

$$\text{Taux d'encrassement du FAP (t)} = (V_0 - \text{Volume utile (t)}) / (V_0 - \text{Volume libre}) * 100$$

Calcul du kilométrage prévu pour le nettoyage du FAP

Cette variable sert au réseau après-vente d'estimateur du kilométrage auquel devrait avoir lieu le changement ou le nettoyage du filtre à particules.

$$\text{Kilométrage nettoyage du FAP (t)} = \text{Distance parcourue depuis FAP neuf} * 100/\text{Taux d'encrassement du FAP (t)}$$

Calcul de la distance restant à parcourir avant le nettoyage du FAP

Cette variable sert au réseau après-vente d'estimateur de la distance restant à parcourir avant de procéder au changement ou au nettoyage du filtre à particules.

$$\text{Distance restante avant nettoyage du FAP (t)} = \text{Kilométrage nettoyage du FAP (t)} - \text{Distance FAP neuf.}$$

On conçoit alors que grâce à un tel système, il est possible d'optimiser la maintenance des filtres à particules et d'en réduire les coûts.

**Revendications**

1. Système d'aide à la maintenance d'un filtre à particules intégré dans une ligne d'échappement d'un moteur Diesel de véhicule automobile, **caractérisé en ce qu'**il comporte :

   - des moyens (1) de calcul du volume de cendres de l'huile de lubrification du moteur,
   - des moyens (2) de calcul du volume de cendres du carburant d'alimentation du moteur,
   - des moyens (4) de calcul du volume utile (V.u) du filtre à particules à partir d'un volume total de ce filtre à l'état neuf (V.neuf) et des volumes de cendres calculés précédemment, et
   - des moyens (5) de calcul d'un taux d'encrassement du filtre (t.e) à particules à partir du volume total du filtre à l'état neuf (V.neuf) et du volume utile (V.u) calculé précédemment pour déclencher une requête de maintenance (Req.Maint) lorsque le taux d'encrassement (t.e) dépasse un seuil prédéterminé (seuil).

2. Système d'aide à la maintenance selon la revendication 1, **caractérisé en ce qu'**il comporte en outre des moyens (3) de calcul du volume de résidus de combustion d'un additif destiné à abaisser la température de combustion des particules piégées dans le filtre à particules, et mélangé au carburant d'alimentation de ce moteur, et raccordés aux moyens (4) de calcul du volume utile (V.u).

3. Système d'aide à la maintenance selon la revendication 1 ou 2, **caractérisé en ce qu'**il comporte en outre des moyens (7) de calcul du kilométrage (Km maint.) auquel devra être prévue une opération de maintenance du filtre à particules, à partir du kilométrage parcouru (Km par.) par le véhicule depuis l'état filtre à particules neuf ou nettoyé et du taux d'encrassement (t.e) du filtre tel que calculé précédemment.

4. Système d'aide à la maintenance selon la revendication 3, **caractérisé en ce qu'**il comporte en outre des moyens (8) de calcul du kilométrage restant à parcourir (km rest.) avant l'opération de maintenance du filtre à particules, à partir du kilométrage de maintenance (km maint.) calculé précédemment et du kilométrage déjà parcouru par le véhicule (km par.).

6

**Claims**

1. Maintenance support system for a particle filter integrated into an exhaust system of a motor vehicle diesel engine, **characterised in that** it comprises:

   • means (1) for calculating the volume of ash from engine lubrication oil,
   • means (2) for calculating the volume of ash from engine fuel,
   • means (4) for calculating the effective volume (Ve) of the particle filter from a total volume of this filter in new state (Vnew) and volumes of ash calculated previously, and
   • means (5) for calculating a degree of fouling (df) of the particle filter from the total volume of the filter in new state (Vnew) and the effective volume (Ve) calculated previously to activate a maintenance request (Req. maint.) when the degree of fouling (df) exceeds a predetermined threshold (threshold).

2. Maintenance support system according to Claim 1, **characterised in that** it additionally comprises means (3) for calculating the volume of combustion residues of an additive, which is intended to lower the combustion temperature of the particles trapped in the particle filter and is mixed with the fuel feeding this engine, said means (3) being linked to the means (4) for calculating the effective volume (Ve).

3. Maintenance support system according to Claim 1 or 2, **characterised in that** it additionally comprises means (7) for calculating the mileage (m. maint.), at which a maintenance operation on the particle filter should be scheduled, from the mileage covered (m.cov.) by the vehicle since the particle filter was in new or cleaned state and the degree of fouling (df) of the filter as calculated previously.

4. Maintenance support system according to Claim 3, **characterised in that** it additionally comprises means (8) for calculating the remaining mileage (m. rem.) to be covered before the maintenance operation for the particle filter from the maintenance mileage (m. maint.) calculated previously and the mileage already covered (m.cov.) by the vehicle.

**Patentansprüche**

1. System zur Wartungsüberwachung eines Partikelfilters, der in eine Abgasleitung eines Dieselmotors für Kraftfahrzeuge eingebaut ist, **dadurch gekennzeichnet, dass** es aufweist:

   - Vorrichtungen (1) zur Berechnung des Verbrennungsrückstandsvolumens aus dem Schmieröl des Motors,
   - Vorrichtungen (2) zur Berechnung des Verbrennungsrückstandsvolumens aus dem Versorgungskraftstoff des Motors,
   - Vorrichtungen (4) zur Berechnung des Nutzvolumens (V.u) des Partikelfilters ausgehend von einem Gesamtvolumen dieses Filters im Neuzustand (V. neuf) und den zuvor berechneten Verbrennungsrückstandsvolumen, und
   - Vorrichtungen (5) zur Berechnung einer Zusetzungsrate des Partikelfilters (t.e) ausgehend von dem Gesamtvolumen des Filters im Neuzustand (V. neuf) und des zuvor berechneten Nutzvolumens (V.u), um eine Wartungsanforderung (Req.Maint) auszulösen, wenn die Zusetzungsrate (t.e) einen zuvor bestimmten Schwellenwert (seuil) übersteigt.

2. System zur Wartungsüberwachung gemäß Anspruch 1, **dadurch gekennzeichnet, dass** es außerdem Vorrichtungen (3) zur Berechnung des Verbrennungsrückstandsvolumens aus einem Zusatzstoff aufweist, der dafür bestimmt ist, die Verbrennungstemperatur der in dem Partikelfilter gefangenen Partikel abzusenken, und der dem Versorgungskraftstoff dieses Motors beigemischt wird, wobei die Vorrichtungen (3) an die Vorrichtungen (4) zur Berechnung des Nutzvolumens (V.u) angeschlossen sind.

3. System zur Wartungsüberwachung gemäß Anspruch 1 oder 2, **dadurch gekennzeichnet, dass** es außerdem Vorrichtungen (7) zur Berechnung der Kilometerleistung (Km maint.) aufweist, bei welcher ein Wartungsvorgang des Partikelfilters vorgesehen werden muss, ausgehend von der von dem Fahrzeug seit dem neuen oder gereinigten Zustand des Partikelfilters gelaufenen Kilometerleistung (Km par.) und der Zusetzungsrate (t.e) des Filters, wie zuvor berechnet.

4. System zur Wartungsüberwachung gemäß Anspruch 3, **dadurch gekennzeichnet, dass** es außerdem Vorrichtungen (8) zur Berechnung der Kilometerleistung (Km rest.) aufweist, die noch vor dem Wartungsvorgang des Partikelfilters gefahren werden muss, ausgehend von der zuvor berechneten Wartungskilometerleistung (Km maint.) und der bereits von dem Fahrzeug gefahrenen Kilometerleistung (Km par.).

1

4

5

seuil

6

2

V.u

t.e.

Req. maint.

3

V.neuf

Km par.

8

7

Km rest.

Km maint.

EP 1 689 986 B1